# EUROPÄISCHE PATENTSCHRIFT

(11) **EP 1 218 431 B1**
(45) Veröffentlichungstag und Bekanntmachung des Hinweises auf die Patenterteilung: **27.09.2006**
(21) Anmeldenummer: 00958356.8
(22) Anmeldetag: 02.08.2000
(51) Int. Cl.: C08G 18/10, C08G 18/67, C09J 175/16

(54) **VERWENDUNG EINES UV-REAKTIVEN, FEUCHTIGKEITSVERNETZENDEN PU-SCHMELZKLEBSTOFFES**
USE OF A UV-REACTIVE, HUMIDITY-CROSS-LINKING PU HOT-MELT-TYPE ADHESIVE
UTILISATION D'UNE COLLE FUSIBLE PU RETICULANT A L'HUMIDITE ET REACTIVE AUX UV

(30) Priorität: 11.08.1999 DE 19937341
(43) Veröffentlichungstag der Anmeldung: 03.07.2002
(73) Patentinhaber: Henkel Kommanditgesellschaft auf Aktien, 40589 Düsseldorf (DE)
(72) Erfinder: MÖLLER, Thomas, D-40593 Düsseldorf (DE); ONUSSEIT, Hermann, D-42781 Haan (DE); MEYERS, Michael, D-52538 Gangelt (DE); SCHMITT, Achim, D-42799 Leichlingen (DE); SCHNEIDER, Uwe, D-40721 Hilden (DE)
(86) Internationale Anmeldenummer: PCT/EP2000/007470
(87) Internationale Veröffentlichungsnummer: WO 2001/012691

(56) Entgegenhaltungen:
- EP-A- 0 175 474
- EP-A- 0 603 046
- WO-A-95/02621
- DE-A- 19 800 676
- DE-A- 19 853 813

## Beschreibung

Die Erfindung betrifft die Verwendung eines UV-reaktiven Schmelzklebstoffes auf der Basis eines feuchtigkeitsvernetzenden Polyurethans für die Ableimung und Klebebindung von Buchblocks.

Die Formbeständigkeit eines Buchrückens hängt bei der Benutzung des Buches, der Aufbewahrung und beim Transport in hohem Maße vom Profil des Blockrückens ab, das dem Block während der Herstellung verliehen wurde. Es kann gerade oder gerundet sein. Am zweckmäßigsten ist der gerundete Rücken. Durch das Runden des abgeleimten Buches wird erreicht:
a) Die Steigung der Falzbogen im Bereich der Bogenrundung wird gleichmäßig verlagert.
b) Die Festigkeit der Verbindung der Falzbogen im Blockverband wird erhöht.
c) Es werden bessere Bedingungen für das Öffnen des Buches geschaffen.
d) Die Rückenform bleibt bei Benutzung des Buches besser erhalten.
Für durch Klebebindung hergestellte Bücher gilt Analoges.
Beim Aufschlagen von Büchern mit gerundeten Rücken und elastischer Papierrückeneinlage der Buchdecke entstehen nicht so hohe Belastungen auf Vorsätze und Deckenfalze wie bei Büchern mit geraden Rücken und steifer Rückeneinlage. Für hochwertige Buchrücken ist es also zweckmäßig, sie zu runden.
Dazu werden die abgeleimten oder klebegebundenen Buchblocks einzeln oder mehrweise von Hand angelegt oder über ein Transportband in die Schneidanlage geführt. Der beschnittene Buchblock wird auf dem Vorderschnitt stehend direkt von 3-Messer-Automaten, vom Buchblock-Anleger oder Takt unabhängig von Hand über ein Transportband, Stabketten oder einen Transportwagen der Maschine zum Runden und Abpressen zugeführt. Dabei wird der Buchblock z.B. zunächst durch Formstücke und Formschiene vorgerundet und anschließend durch Riffelwalzen rund gezogen. Dann wird der Block durch zwei Pressbacken im Falzbereich erfaßt und durch einen Formklotz abgepreßt. Der gerundete und abgepreßte Block wird entweder in eine Auslage geführt oder direkt an die Nachfolgemaschine übergeben.
Auf die Qualität des Rundens und Abpressens hat unter anderem das Verfahren der Verklebung sowie die Eigenschaften des Klebstoff-Filmes einen bedeutenden Einfluß.

Für die Klebebindung von Druckerzeugnissen wie zum Beispiel Bücher, Katalogen usw. werden verschiedene Klebstoffsysteme eingesetzt.

Seit langem bekannt sind Klebstoffdispersionen z.B. auf Basis von weichgemachten Vinylacetatpolymeren, die auch langfristig gute Eigenschaften mitbringen wie hohe Bindewerte, gute Mineralölbeständigkeit und Wärmebeständigkeit. Eingesetzt werden diese Klebstoffe daher sowohl für hochwertige Druckerzeugnisse als auch für low level Bindungen wie zum Beispiel viele Taschenbücher. Nachteile dieser Klebstoffe sind deren mangelhafte Kälteflexibilität sowie die Tatsache, daß vor der weiteren Verarbeitung, wie der Rundung des Buchblocks, eine Trocknung der Klebstoffschicht erforderlich ist. Für in-line Produktionen sind daher Trockenstraßen erforderlich, was sowohl ein hoher maschineller und räumlicher Aufwand ist und hohe Energiekosten verursacht, als auch ein begrenzender Faktor für die Geschwindigkeit darstellt.

Schmelzklebstoffe bilden eine weitere Klebstoffklasse. Eingesetzt werden hier zum Beispiel Formulierungen auf Basis von Ethylen-Vinylacetat-Copolymeren (EVA). Vorteile gegenüber Dispersionen sind die in der Regel schnellen Abbindegeschwindigkeiten. Dies ermöglicht die Produktion hoher Stückzahlen in kurzen Zeiträumen. Nachteile gegenüber Dispersionen sind schlechtere Bindewerte und Mineralölbeständigkeiten sowie niedrigere Wärme- und Alterungsbeständigkeiten. EVA basierte Hotmelts werden daher weniger für hochwertige Produktionen, sondern für Massenwaren wie Telefonbücher, Magazine, Kataloge usw. oder Taschenbücher eingesetzt. Diese werden meist nicht gerundet, sondern besitzen flache Buchrücken. Falls sie gerundet werden, geschieht das auf vorgenannte Weise.

Eine weitere Schmelzklebstoffklasse, mit welcher hochwertige Klebebindungen realisiert werden können, basieren auf reaktiven, mit Feuchtigkeit nachvernetzenden Polyurethanen. Bindewerte, Mineralölbeständigkeit und Wärmebeständigkeit sind deutlich besser als die von EVA basierten Hotmelts. In der Kälteflexibilität sind Polyurethanklebstoffe sowohl EVA-basierten Hotmelt als auch Dispersionsklebstoffen überlegen. Nachteilig ist die geringe Abbindegeschwindigkeit der chemischen Vernetzung herkömmlicher Systeme. Die Gebrauchsfähigkeit oder Weiterverarbeitbarkeit des Druckerzeugnisses ist daher frühestens nach mehreren Stunden i.a. erst nach mehreren Tagen erreicht.

Alle diese Klebstoffsysteme werden auch zum Ableimen von fadengebundenen Druckerzeugnissen verwendet, die dann anschließend gerundet werden.

In der WO 98/40225 werden Klebstoff-Systeme für ein ein- oder mehrstufiges Klebebindungsverfahren zur Klebebindung von Druckschriften beschrieben. Zur Steigerung der Festigkeit wird für die Klebebindung von Büchern ein fotosensibler Klebstoff vorgeschlagen, der radikalisch und/oder kationisch reagiert. Er kann im one- oder im two-shot-Verfahren eingesetzt werden. Als zweiter Klebstoff kommen übliche Schmelzklebstoffe und Dispersions-Klebstoffe in Frage. Bei dem foto reaktiven Klebstoff A handelt es sich um eine niedrigviskose vernetzbare Mischung aus einem Monomeren und/oder einem Polymeren, die eine Viskosität bei der Verarbeitungstemperatur von 0,1 bis 20 Pas aufweist. Der fakultativ verwendbare Schmelzklebstoff B basiert auf Polyamiden, Polyurethanen und insbesondere auf Copolymeren von ethylenisch ungesättigten Monomeren. Es wird auch ein Verfahren zur Klebbindung von Broschüren, Büchern, Katalogen, Schreibblocks und ähnlichen Druckartikeln nach einem ein- oder mehrstufigen Klebebindungsverfahren beschrieben, bei dem der Buchblock zunächst mit einem niedrig viskosen vernetzbaren Klebstoff A mit einer Filmdicke von weniger als 0,2 mm beschichtet wird und bei dem dann der Film abbindet und bei dem gegebenenfalls schließlich der Klebstoff B aufgetragen wird, wobei der Polymerfilm A weiterhin wenigstens einen Fotoinitiator enthält. Der Klebstoff A kann neben den UV-reaktiven Gruppen auch noch freie NCO-Gruppen enthalten.
Von einer konkreten Anwendung dieses Klebstoffsystems zum Runden von Buchrücken ist keine Rede.

Es wurde nun gefunden, daß ein Teil dieser Klebstoffsysteme sich sehr gut eignet für die Rundung von Buchblocks im Anschluß an die Verklebung (in-line-Rundung).

Gegenstand der vorliegenden Anmeldung ist demnach die Verwendung von UV-reaktiven Schmelzklebstoffen auf Basis von feuchtigkeitsreaktiven Polyurethanen bei der In-line-Rundung von Buchblocks (direkt im Anschluß an die Verklebung). Es handelt sich dabei um Schmelzklebstoffe mit zwei Aushärtemechanismen (Dual-Cure). Dabei wird die Frühfestigkeit und damit die Weiterverarbeitbarkeit des Buchblocks, über einen Molekulargewichtsaufbau mittels Strahlung, insbesondere UV-Licht erzeugt. Die Endeigenschaften werden dann über eine Vernetzungsreaktion mit (Luft-)Feuchtigkeit erreicht. Die chemische Basis dieser Produkte ist in der WO 98/40225 beschrieben, worauf ausdrücklich Bezug genommen wird. Demnach sind Schmelzklebstoffe aus einer reaktiven Komponente, einem Fotoinitiator sowie gegebenenfalls aus Zusatzstoffen für den angegebenen Zweck geeignet.

Der reaktive Klebstoff enthält ganz allgemein olefinisch ungesättigte Doppelbindungen sowie NCO-Gruppen.
Im Rahmen der vorliegenden Erfindung sind hierbei olefinisch ungesättigte Doppelbindungen bevorzugt, wie sie beispielsweise in den Derivaten der Acrylsäure oder des Styrols vorliegen. Besonders geeignet und im Rahmen der vorliegenden Erfindung bevorzugt sind die Derivate der Acrylsäure, beispielsweise die Acrylate und die Meth-acrylate mit 1 bis 16, vorzugsweise 1 bis 4 C-Atomen in der AlkoholKomponente.

Als radikalisch reaktive Komponente im erfindungsgemäß zu verwendenden Klebstoff ist vorzugsweise mindestens ein Polymeres mit einem Molekulargewicht von mindestens 800 enthalten. Zum Einsatz als reaktive Komponente sind Polyurethane geeignet, die mindestens eine durch Bestrahlung mit UV-Licht oder mit Elektronenstrahlen polymerisierbare funktionelle Gruppe mit einer olefinisch ungesättigten Doppelbindung und mindestens eine NCO-Gruppe, aufweisen.

Besonders einfach lassen sich die erfindungsgemäß als reaktive Komponente einsetzbaren Polymeren herstellen, indem von einem Basis-Polymeren ausgegangen wird, das mindestens zwei mit Isocyanatgruppen reaktionsfähige funktionelle Gruppen, vorzugsweise OH-Gruppen, im Polymermolekül aufweist. An ein solches Basis-Polymeres kann durch Umsetzung mit einem Polyisocyanat oder einem geeignet funktionalisierten Monoisocyanat auf besonders einfache Weise die gewünschte funktionelle Gruppe angebracht werden.

Zum Einsatz als Basis-Polymeres geeignet ist beispielsweise ein Polymeres ausgewählt aus einer Gruppe enthaltend Polyester, Polyether, Polycarbonate oder Polyacetale mit einem Molekulargewicht (Mₙ) von mindestens etwa 200, oder Gemische aus zwei oder mehr davon, die terminale OH-Gruppen aufweisen.

Im Rahmen der vorliegenden Erfindung als Basis-Polymere zur Herstellung der reaktiven Komponente einsetzbare Polyester können in einer dem Fachmann bekannten Weise durch Polykondensation von Säure- und Alkoholkomponenten gewonnen werden, insbesondere durch Polykondensation einer Polycarbonsäure oder eines Gemischs aus zwei oder mehr Polycarbonsäuren und einem Polyol oder einem Gemisch aus zwei oder mehr Polyolen.

Im Rahmen der vorliegenden Erfindung zur Herstellung des Basis-Polymeren geeignete Polycarbonsäuren können auf einem aliphatischen, cycloaliphatischen, araliphatischen, aromatischen oder heterocyclischen Grundkörper aufgebaut sein und gegebenenfalls neben den mindestens zwei Carbonsäuregruppen noch einen oder mehrere im Rahmen einer Polykondensation nicht-reaktive Substituenten, beispielsweise Halogenatome oder olefinisch ungesättigte Doppelbindungen, aufweisen. Gegebenenfalls können anstatt der freien Carbonsäuren auch deren Säureanhydride (soweit existent), oder deren Ester mit C₁₋₅-Monoalkoholen, oder Gemische aus zwei oder mehr davon, zur Polykondensation eingesetzt werden. Geeignete Polycarbonsäuren sind beispielsweise Bernsteinsäure, Adipinsäure, Korksäure, Azelainsäure, Sebacinsäure, Glutarsäure, Glutarsäureanhydrid, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäuren oder Trimerfettsäuren oder Gemische aus zwei oder mehr davon. Gegebenenfalls können untergeordnete Mengen an monofunktionellen Fettsäuren im Reaktionsgemisch vorliegen.

Als Diole zur Herstellung eines als Basis-Polymeres einsetzbaren Polyesters oder Polycarbonats können eine Vielzahl von Polyolen eingesetzt werden. Beispielsweise sind dies aliphatische Polyole mit 2 bis 4 OH-Gruppen pro Molekül. Die OH-Gruppen können sowohl primär als auch sekundär gebunden sein. Zu den geeigneten aliphatischen Polyolen zählen beispielsweise Ethylenglykol, Propandiol-1,2, Propandiol-1,3, Butandiol-1,4, Butandiol-1,3, Butandiol-2,3, Butendiol-1,4, Butindiol-1,4, Pentandiol-1,5, sowie die isomeren Pentandiole, Pentendiole oder Pentindiole oder Gemische aus zwei oder mehr davon, Hexandiol-1,6, sowie die isomeren Hexandiole, Hexendiole oder Hexindiole oder Gemische aus zwei oder mehr davon, Heptandiol-1,7 sowie die isomeren Heptan-, Hepten- oder Heptindiole, Octandiol-1,8 sowie die isomeren Octan-, Octen- oder Octindiole, und die höheren Homologen oder Isomeren der genannten Verbindung, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben, oder Gemische aus zwei oder mehr davon. Ebenfalls geeignet sind höherfunktionelle Alkohole wie beispielsweise Glycerin, Trimethylolpropan, Pentaerythrit oder Zuckeralkohole wie Sorbit oder Glucose, sowie oligomere Ether der genannten Substanzen mit sich selbst oder im Gemisch aus zwei oder mehr der genannten Verbindungen untereinander, beispielsweise Polyglycerin mit einem Polymerisationsgrad von etwa 2 bis etwa 4. Bei den höherfunktionellen Alkoholen können eine oder mehr OH-Gruppen mit monofunktionellen Carbonsäuren mit 1 bis etwa 20 C-Atomen verestert sein, mit der Maßgabe, daß im Durchschnitt wenigstens zwei OH-Gruppen erhalten bleiben. Die genannten höherfunktionellen Alkohole können in reiner Form oder, soweit möglich, als die im Rahmen ihrer Synthese erhältlichen technischen Gemische eingesetzt werden.

Weiterhin können als Polyolkomponente zur Herstellung der Basis-Polymeren die Umsetzungsprodukte niedermolekularer, polyfunktioneller Alkohole mit Alkylenoxiden, sogenannte Polyetherpolyole, eingesetzt werden. Polyetherpolyole, die zur Herstellung von als Basis-Polymeren geeigneten Polyestern eingesetzt werden sollen, werden vorzugsweise durch Umsetzung von Polyolen mit Alkylenoxiden erhalten. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandiolen, wie oben genannt, oder Gemischen aus zwei oder mehr davon, mit Ethylenoxid, Propylenoxid oder Butylenoxid oder Gemischen aus zwei oder mehr davon. Ferner sind auch die Umsetzungsprodukte polyfunktioneller Alkohole wie Glycerin, Trimethylolethan oder Trimethylolpropan, Pentaerythrit oder Zuckeralkohole oder Gemischen aus zwei oder mehr davon, mit den genannten Alkylenoxiden zu Polyetherpolyolen geeignet. Besonders geeignet sind aus den genannten Umsetzungen erhältliche Polyetherpolyole mit einem Molekulargewicht (Mₙ) von etwa 100 bis etwa 3.000, vorzugsweise von etwa 200 bis etwa 2.000. Die genannten Polyetherpolyole können mit den oben genannten Polycarbonsäuren in einer Polykondensationsreaktion zu den als Basis-Polymeren einsetzbaren Polyestem umgesetzt werden.

Ebenfalls als Basis-Polymere mit terminalen OH-Gruppen geeignet sind Polyetherpolyole, wie sie beispielsweise in der oben geschilderten Weise entstehen. Polyetherpolyole werden üblicherweise durch Umsetzung einer Startverbindung mit mindestens zwei reaktiven Wasserstoffatomen mit Alkylen- oder Arylenoxiden, beispielsweise Ethylenoxid, Propylenoxid, Butylenoxid, Styroloxid, Tetrahydrofuran oder Epichlorhydrin oder Gemischen aus zwei oder mehr davon, erhalten. Geeignete Startverbindungen sind beispielsweise Wasser, Ethylenglykol, Propylenglykol-1,2 oder -1,3, Butylenglykol-1,4, oder -1,3, Hexandiol-1,6, Octandiol-1,8, Neopentylglykol, 1,4-Hydroxymethylcyclohexan, 2-Methyl-1,3-Propandiol, Glycerin, Trimethylolpropan, Hexantriol-1,2,6, Butantriol-1,2,4, Trimethylolethan, Pentaerythrit, Mannitol, Sorbitol, Methylglycoside, Zucker, Phenol, Isononylphenol, Resorcin, Hydrochinon, 1,2,2- oder 1,1,2-Tris-(Hydroxyphenyl)-Ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen.

Ebenfalls zum Einsatz als Basiskomponente geeignet sind Polyetherpolyole, die durch Vinylpolymere modifiziert wurden. Derartige Produkte sind beispielsweise erhältlich, indem Styrol- oder Acrylnitril oder deren Gemisch in Gegenwart von Polyethern polymerisiert wird.

Ein im Rahmen der vorliegenden Erfindung besonders zum Einsatz als Basis-Polymeres geeignetes Polyetherpolyol ist Polypropylenglykol mit einem Molekulargewicht von etwa 300 bis etwa 1.500.

Ebenfalls als Basis-Polymeres oder als Polyolkomponente zur Herstellung des Basis-Polymeren geeignet sind Polyacetale. Unter Polyacetalen werden Verbindungen verstanden, wie sie durch Umsetzung von Glykolen, beispielsweise Diethylenglykol oder Hexandiol, mit Formaldehyd erhältlich sind. Im Rahmen der Erfindung einsetzbare Polyacetale können auch durch die Polymerisation cyclischer Acetale erhalten werden.

Weiterhin als Basis-Polymere oder als Polyole zur Herstellung der Basis-Polymeren geeignet, sind Polycarbonate. Polycarbonate können beispielsweise durch die Reaktion der oben genannten Polyole, insbesondere von Diolen wie Propylenglykol, Butandiol-1,4 oder Hexandiol-1,6, Diethylenglykol, Triethylenglykol oder Tetraethylenglykol oder Gemischen aus zwei oder mehr davon, mit Diarylcarbonaten, beispielsweise Diphenylcarbonat oder Phosgen, erhalten werden.

Ebenfalls als Basis-Polymere oder als Polyolkomponente zur Herstellung der Basis-Polymeren geeignet sind OH-Gruppen tragende Polyacrylate. Solche Polyacrylate sind beispielsweise erhältlich durch Polymerisation von ethylenisch ungesättigten Monomeren, die OH-Gruppen tragen. Solche Monomeren sind beispielsweise durch die Veresterung von ethylenisch ungesättigten Carbonsäuren und difunktionellen Alkoholen erhältlich, wobei der Alkohol in der Regel nur in einem leichten Überschuß vorliegt. Hierzu geeignete, ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Falls das Molekulargewicht des Basis-Polymeren für den Einsatz als reaktive Komponente zu gering ist, kann eine Erhöhung des Molekulargewichts beispielsweise durch Kettenverlängerung erfolgen. Vorteilhafterweise wird hierzu das terminale OH-Gruppen tragende Basis-Polymere zunächst mit einer in Bezug auf die terminalen OH-Gruppen polyfunktionellen, vorzugsweise einer difunktionellen Verbindung umgesetzt. Als polyfunktionelle Verbindungen im erfindungsgemäßen Sinne eignen sich daher besonders Polyepoxide, insbesondere Diepoxide, oder vorzugsweise Polyisocyanate, insbesondere Diisocyanate. Besonders bevorzugt sind im Rahmen der vorliegenden Erfindung die Diisocyanate. Die zur Erzielung einer bestimmten Molekulargewichtserhöhung erforderlichen stöchiometrischen Verhältnisse zwischen Basis-Polymerem und polyfunktioneller Verbindung sind dem Fachmann bekannt. In der Regel wird es jedoch so sein, daß zum Erzielen einer Kettenverlängerung ein Überschuß an Basis-Polymerem bei der Kettenverlängerungsreaktion vorliegt, wobei die entstehenden, kettenverlängerten Basis-Polymeren wieder terminale OH-Gruppen aufweisen.

Um zum Einsatz als reaktive Komponente geeignet zu sein, müssen die oben genannten, terminale OH-Gruppen aufweisenden, gegebenenfalls kettenverlängerten Basis-Polymere mit mindestens einer durch Bestrahlung mit UV-Licht oder mit Elektronenstrahlen polymerisierbaren funktionellen Gruppe mit einer olefinisch ungesättigten Doppelbindung und mindestens einer, durch Reaktion mit einer mindestens ein acides Wasserstoffatom aufweisenden Verbindung polymerisierbaren, NCO-Gruppe versehen werden.

Hierzu werden die Basis-Polymeren zweckmäßigerweise mit einer in bezug auf die terminalen OH-Gruppen polyfunktionellen, vorzugsweise einer difunktionellen Verbindung umgesetzt. Als polyfunktionelle Verbindungen im erfindungsgemäßen Sinne eignen sich die schon zur Kettenverlängerung einsetzbaren polyfunktionellen Polyisocyanate, insbesondere Diisocyanate. Geeignete polyfunktionelle Polyisocyanate, die zur Umsetzung mit den Basis-Polymeren geeignet sind, enthalten im Durchschnitt zwei bis höchstens etwa vier Isocyanatgruppen. Beispiele für geeignete Isocyanate sind 1,5-Naph-thalindüsocyanat, 4,4'-Diphenylmethandiisocyanat (MDI), hydriertes MDI (Dicyclohexylmethandiisocyanat, H₁₂-MDI), Xylylendiisocyanat (XDI), Tetramethylxylylendiisocyanat (TMXDI), 4,4'-Diphenyldimethylmethandiisocyanat sowie Di- und Tetraalkyldiphenylmethandiisocyanat, 4,4'-Dibenzyldiisocyanat, 1,3-Phenylendiisocyanat, 1,4-Phenylendiisocyanat, 2,4- und 2,6-Toluylendiisocyanat (TDI) und deren Gemische, insbesondere ein Gemisch enthaltend etwa 20 % 2,4- und 80 Gew.-% 2,6-Toluylendi-isocyanat, 1-Methyl-2,4-diisocyanatocyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, 1,4-Butandiisocyanat, 1,6-Hexandiisocyanat (HDI), Cyclohexan-1,4-diisocyanat, Ethylendiisocyanat, Phthalsäurebisisocyanatoethylester; Polyisocyanate, die reaktive Halogenatome enthalten, wie 1-Chlormethylphenyl-2,4-diisocyanat, 1-Bromethylphenyl-2,6-diisocyanat, 3,3-Bis-chlormethylether-4,4'-diphenyldi-isocyanat. Ebenso einsetzbar sind schwefelhaltige Polyisocyanate, wie sie beispielsweise durch Umsetzung von 2 mol Hexamethylendiisocyanat mit 1 mol Thiodiglykol oder Dihydroxydihexylsulfid erhältlich sind. Andere Diisocyanate sind Trimethylhexamethylendiisocyanate, 1,4-Diisocyanatobutan, 1,2-Diisocyanatododekan und Dimerfettsäurediisocyanate. Triisocyanatoisocyanurate können durch Trimerisierung von Diisocyanaten bei erhöhten Temperaturen, beispielsweise bei etwa 200° und/oder in Gegenwart eines Katalysators, beispielsweise einem Amin, erhalten werden, und sind ebenfalls im Rahmen der vorliegenden Erfindung einsetzbar. Die genannten Polyisocyanate können im Rahmen der vorliegenden Erfindung einzeln oder als Gemisch aus zwei oder mehr der genannten Polyisocyanate eingesetzt werden. Vorzugsweise wird im Rahmen der vorliegenden Erfindung ein einzelnes Polyisocyanat oder ein Gemisch aus zwei oder drei Polyisocyanaten eingesetzt. Als einzeln oder im Gemisch einzusetzende Polyisocyanate bevorzugt sind HDI, MDI oder TDI, beispielsweise ein Gemisch aus MDI und TDI.

Vorzugsweise wird das Basis-Polymere mit der polyfunktionellen Verbindung, vorzugsweise mit dem Diisocyanat, in einem Verhältnis von 1 :>2 umgesetzt, wobei der Überschuß an polyfunktioneller Verbindung beispielsweise gerade so groß gewählt wird, daß eine Kettenverlängerung des Basis-Polymeren vermieden wird aber nur geringe Mengen an nicht-umgesetzter polyfunktioneller Verbindung in der reaktiven Komponente vorliegen. Insbesondere beim Einsatz eines Diisocyanats als polyfunktionelle Verbindung kann eine solche vorgehensweise vorteilhaft sein. Auf diese Weise erhält man ein Polymeres, das terminal zwei funktionelle Gruppen trägt, die durch Reaktion mit einer mindestens ein acides Wasserstoffatom aufweisenden Verbindung polymerisierbar sind.

Um aus einem solchen Polymeren ein zum Einsatz als reaktive Komponente geeignetes Polymere zu erhalten, setzt man das Polymere zweckmäßigerweise mit einer Verbindung um, die sowohl eine durch Bestrahlung mit UV-Licht oder mit Elektronenstrahlen polymerisierbare funktionelle Gruppe als auch eine zur Reaktion mit der terminalen funktionellen Gruppe am Polymeren geeignete funktionelle Gruppe aufweist. Zu diesem Zweck besonders gut geeignet sind die Hydroxyalkylacrylate oder -methacrylate, d.h. Umsetzungsprodukte der Acrylsäure oder Methacrylsäure mit difunktionellen Alkoholen. Besonders geeignet sind im Rahmen der vorliegenden Erfindung beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Zum Einsatz als reaktive Komponente geeignete Polymere lassen sich beispielsweise auch in mehreren Schritten dadurch erhalten, daß man in einem ersten Schritt das terminale OH-Gruppen tragende Basis-Polymere mit einer Verbindung umsetzt, die sowohl eine durch Bestrahlung mit UV-Licht oder mit Elektronenstrahlen polymerisierbare funktionelle Gruppe als auch eine zur Reaktion mit der terminalen OH-Gruppe am Basis-Polymeren befähigte funktionelle Gruppe aufweist. Eine solche Verbindung ist beispielsweise Styrolisocyanat. Weitere derartige Verbindungen lassen sich beispielsweise durch Umsetzung einer etwa äquimolaren Menge eines Hydroxyalkylacrylats oder -methacrylats mit einem Diisocyanat erhalten. Nach Umsetzung einer etwa äquimolaren Menge des (gegebenenfalls durch Kettenverlängerung an das zum Einsatz geforderte Molekulargewicht angepaßten) Basis-Polymeren mit einer derartigen Verbindung in einem zweiten Schritt entsteht ein Polymeres, das terminal sowohl eine OH-Gruppe als auch eine durch Bestrahlung mit UV-Licht oder mit Elektronenstrahlen polymerisierbare funktionelle Gruppe aufweist. Setzt man dieses Polymere beispielsweise mit einem Diisocyanat um, so erhält man ein Polymeres, das zum Einsatz als reaktive Komponente geeignet ist.

Es ist zweckmäßig, die beiden oben genannten Schritte zusammenzufassen, indem man ein Basis-Polymeres, ein Diisocyanat (oder gegebenenfalls eine andere polyfunktionelle Verbindung im Sinne des oben gesagten) und eine Verbindung, die sowohl eine durch Bestrahlung mit UV-Licht oder mit Elektronenstrahlen polymerisierbare funktionelle Gruppe mit einer olefinisch ungesättigten Doppelbindung als auch eine zur Reaktion mit der terminalen OH-Gruppe am Basis-Polymeren befähigte NCO- Gruppe aufweist, in einem geeigneten molaren Verhältnis miteinander umsetzt, so daß die Anteile der beiden Typen funktioneller Gruppen im durch eine solche Umsetzung erhältlichen Polymerengemisch jeweils zwischen größer als 0% und kleiner als 100% (bezogen auf funktionelle Gruppen) variieren. Gute Ergebnisse lassen sich beispielsweise erhalten, wenn etwa 1 bis etwa 50% der im Polymeren als terminale Gruppen vorliegenden funktionellen Gruppen durch Bestrahlung mit UV-Licht oder mit Elektronenstrahlen polymerisierbare funktionelle Gruppen sind, vorzugsweise etwa 5 bis etwa 30%, und besonders bevorzugt etwa 8 bis etwa 15%.

Typische NCO-Werte für zum Einsatz als reaktive Komponente geeignete Polymere sind etwa 2,5 Gew.-% bis etwa 7 Gew.-%, insbesondere etwa 3,5 Gew.-% bis etwa 5 Gew.-%.

Die im Rahmen der vorliegenden Erfindung eingesetzte reaktive Komponente kann vorteilhafterweise ein Gemisch aus zwei oder mehr der genannten Polymeren darstellen. So ist es beispielsweise vorteilhaft, wenn als Basis-Polymeres ein Gemisch aus einem oder mehreren Polyesterpolyolen und einem oder mehreren Polyetherpolyolen eingesetzt wird. Die verschiedenen Basis-Polymeren können sich dabei beispielsweise im Molekulargewicht (Mₙ) oder im chemischen Aufbau, oder in beidem, unterscheiden.

In einer bevorzugten Ausführungsform der Erfindung werden zur Herstellung der reaktiven Komponente als Basis-Polymere etwa 20 bis etwa 40 Gew.-% Polyesterpolyole und etwa 20 bis etwa 60 Gew.-% Polyetherpolyole, bezogen auf die gesamte Komponente, eingesetzt. In einer weiteren bevorzugten Ausführungsform werden neben einem Polyesterpolyol noch mindestens zwei unterschiedliche Polyetherpolyole als Basis-Polymere eingesetzt, insbesondere ein Gemisch aus einem Polyetherpolyol mit einem Molekulargewicht von etwa 800 bis etwa 1.500 und einem Polyetherpolyol mit einem Molekulargewicht von etwa 300 bis etwa 700.

Zur Herstellung der reaktiven Komponente können, wie oben beschrieben, die einzelnen Basis-Polymeren so mit funktionellen Gruppen ausgestattet und gegebenenfalls kettenverlängert werden, daß sie direkt zum Einsatz als reaktive Komponente geeignet sind. In einer bevorzugten Ausführungsform der Erfindung wird jedoch ein Gemisch aus OH-Gruppen tragenden Basis-Polymeren zunächst mit einer geeigneten Menge an Polyisocyanaten umsetzt und anschließend mit Verbindungen, die sowohl eine durch Bestrahlung mit UV-Licht oder mit Elektronenstrahlen polymerisierbare funktionelle Gruppe als auch eine zur Reaktion mit der terminalen OH-Gruppe am Basis-Polymeren befähigte funktionelle Gruppe aufweisen, in einem geeigneten molaren Verhältnis zur Reaktion gebracht.

Als reaktive Komponente kann auch mindestens eine Verbindung mit einem Molekulargewicht von etwa 100 bis etwa 8000 eingesetzt werden, die mindestens zwei durch Bestrahlung mit UV-Licht oder mit Elektronenstrahlen polymerisierbare funktionelle Gruppen aufweist.

Als reaktive Komponente sind daher besonders di- oder höherfunktionelle Acrylat- oder Methacrylatester geeignet. Solche Acrylat- oder Methacrylatester umfassen beispielsweise Ester der Acrylsäure oder Methacrylsäure mit aromatischen, aliphatischen oder cycloaliphatischen Polyolen oder Acrylatester von Polyetheralkoholen.

Als Polyole zur Herstellung einer derartigen reaktiven einsetzbaren Acrylat- oder Methacrylatesters können eine Vielzahl von Polyolen eingesetzt werden. Beispielsweise sind dies aliphatische Polyole mit 2-4 OH-Gruppen pro Molekül und 2 bis etwa 40 C-Atomen. Die OH-Gruppen können sowohl primär als auch sekundär gebunden sein. Zu den geeigneten aliphatischen Polyolen zählen beispielsweise Ethylenglykol, Propandiol-1,2, Propandiol-1,3, Butandiol-1,4, Butandiol-1,3, Butandiol-2,3, Butendiol-1,4, Butindiol-1,4, Pentandiol-1,5, sowie die isomeren Pentandiole, Pentendiole oder Pentindiole oder Gemische aus zwei oder mehr davon, Hexandiol-1,6, sowie die isomeren Hexandiole, Hexendiole oder Hexindiole oder Gemische aus zwei oder mehr davon, Heptandiol-1,7 sowie die isomeren Heptan-, Hepten- oder Heptindiole, Octandiol-1,8 sowie die isomeren Octan-, Octen- oder Octindiole, und die höheren Homologen oder Isomeren der genannten Verbindung, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben, oder Gemische aus zwei oder mehr davon.

Ebenfalls geeignet sind höherfunktionelle Alkohole wie beispielsweise Glycerin, Trimethylolpropan, Pentaerythrit oder Zuckeralkohole wie Sorbit oder Glucose, sowie oligomere Ether der genannten Substanzen mit sich selbst oder im Gemisch aus zwei oder mehr der genannten Verbindungen untereinander, beispielsweise Polyglycerin mit einem Polymerisationsgrad von etwa 2 bis etwa 4. Bei den höherfunktionellen Alkoholen können eine oder mehr OH-Gruppen mit monofunktionellen Carbonsäuren mit 1 bis etwa 20 C-Atomen verestert sein, mit der Maßgabe, daß im Durchschnitt wenigstens zwei OH-Gruppen erhalten bleiben. Die genannten höherfunktionellen Alkohole können in reiner Form oder, soweit möglich, als die im Rahmen ihrer Synthese erhältlichen technischen Gemische eingesetzt werden.

Weiterhin können als Polyolkomponente zur Herstellung der Acrylat- oder Methacrylatester die Umsetzungsprodukte niedermolekularer, polyfunktioneller Alkohole mit Alkylenoxiden, sogenannte Polyetherpolyole, eingesetzt werden. Polyetherpolyole, die zur Herstellung von als Basis-Polymeren geeigneten Polyestern eingesetzt werden sollen werden vorzugsweise durch Umsetzung von Polyolen mit Alkylenoxiden erhalten. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandiolen, wie oben genannt, oder Gemischen aus zwei oder mehr davon, mit Ethylenoxid, Propylenoxid oder Butylenoxid oder Gemischen aus zwei oder mehr davon. Ferner sind auch die Umsetzungsprodukte polyfunktioneller Alkohole wie Glycerin, Trimethylolethan oder Trimethylolpropan, Pentaerythrit oder Zuckeralkohole oder Gemischen aus zwei oder mehr davon, mit den genannten -Alkylenoxiden zu Polyetherpolyolen geeignet. Besonders geeignet sind aus den genannten Umsetzungen erhältliche Polyetherpolyole mit einem Molekulargewicht (Mₙ) von etwa 100 bis etwa 2000, vorzugsweise von etwa 150 bis etwa 1500, insbesondere von etwa 150 bis etwa 800.

Acrylatester aliphatischer Diole mit 2 bis etwa 40 Kohlenstoffatomen umfassen beispielsweise Neopentylglykoldi(meth)acrylat, 1,6-Hexandioldi(meth)acrylat, Trimethylolpropantri(meth)acrylat, Pentaerythrittetra(meth)acrylat, sowie (Meth)acrylatester des Sorbits und anderer Zuckeralkohole. Diese (Meth)acrylatester von aliphatischen oder cycloaliphatischen Diolen können mit einem aliphatischen Ester oder einem Alkylenoxid modifiziert werden. Die durch einen aliphatischen Ester modifizierten Acrylate umfassen beispielsweise Neopentylglykolhydroxypivalat-di(meth)acrylat, Caprolacton-modifizierte Neopentylglykolhydroxypivalat-di(meth)acrylate und dergleichen. Die Alkylenoxid-modifizierten Acrylatverbindungen umfassen beispielsweise Ethylenoxid-modifizierte Neopentylglykoldi(meth)acrylate, Propylenoxid-modifizierte Neopentylglykoldi(meth)acrylate, Ethylenoxid-modifizierte 1,6-Hexandioldi(meth)acrylate oder Propylenoxid-modifizierte 1,6-Hexandioldi(meth)acrylate oder Gemische aus zwei oder mehr davon.

Auf Polyetherpolyolen aufgebaute Acrylatmonomere umfassen beispielsweise Neopentylglykol-modifizierte Trimethylolpropandi(meth)acrylate, Polyethylenglykoldi(meth)acrylate, Polypropylenglykoldi(meth)acrylate und dergleichen. Tri- und höherfunktionelle Acrylatmonomere umfassen beispielsweise Trimethylolpropantri(meth)acrylat, Pentaerythritoltri(meth)acrylat, Dipentaerythritoltetra(meth)acrylat, Dipentaerytrhitolpenta(meth)acrylat, Dipentaerythritolhexa(meth)acrylat, Caprolacton-modifiziertes Dipentaerythritolhexa(meth)acrylat, Pentaerythritoltetra(meth)acrylat, Tris[(meth)acryloxyethyl]isocyanurat, Caprolacton-modifizierte Tris[(meth)acryloxyethyl]isocyanurate oder Trimethylolpropantetra(meth)acrylat oder Gemische aus zwei oder mehr davon.

Unter den genannten Di-, Tri- oder höherfunktionellen Acrylatmonomeren, die erfindungsgemäß als reaktive Komponente einsetzbar sind, sind Tripropylenglykoldiacrylat, Neopentylglykolpropoxylatdi(meth)acrylat, Trimethylolpropantri(meth)acrylat und Pentaerythritoltriacrylat bevorzugt.

Die erfindungsgemäß zu verwendenden Klebstoffe enthalten die reaktiven Komponenten in einer Menge von etwa 10 bis etwa 99,9 Gew.-%, vorzugsweise etwa 15 bis etwa 99 Gew.-%.

In der Regel gilt, daß ein höherer Anteil an durch Bestrahlung mit UV-Licht oder mit Elektronenstrahlen polymerisierbaren funktionellen Gruppen in der reaktiven Komponente zu einer höheren Festigkeit einer Klebeverbindung führt, während ein höherer Anteil an NCO-Gruppen eine höhere Endfestigkeit zur Folge hat.

Als ein Photoinitiator für die radikalische Reaktion werden Stoffe und Stoffgemische eingesetzt, die bei Bestrahlung mit Licht mit einer Wellenlänge von etwa 260 bis etwa 480 nm dazu in der Lage ist, eine radikalische Polymerisation olefinisch ungesättigter Doppelbindungen zu initiieren. Im Rahmen der vorliegenden Erfindung sind grundsätzlich alle handelsüblichen Photoinitiatoren geeignet, die mit dem erfindungsgemäßen Klebstoff kompatibel sind, d. h. wenigstens weitgehend homogene Gemische ergeben.

Beispielsweise sind dies alle Norrish-Type I fragmentierenden Substanzen. Beispiele hierfür sind Benzophenon, Campherchinon, Quantacure (Hersteller: International Bio-Synthetics), Kayacure MBP (Hersteller Nippon Kayaku), Esacure BO (Hersteller: Fratelli Lamberti), Trigonal 14 (hersteller: Akzo), Photoinitiatoren der Irgacure® -, Darocure® - oder Speedcure® -Reihe (Hersteller: Ciba-Geigy), Darocure® 1173 und/oder Fi-4 (Hersteller: Eastman) Insbesondere geeignet sind darunter Irgacure® 651, Irgacure® 369, Irgacure® 184, Irgacure® 907, Irgacure® 1850, Irgacure® 1173 (Darocure® 1173), Irgacure® 1116, Speedcure® EDB, Speedcure® ITX, Irgacure® 784 oder Irgacure® 2959 oder Gemische aus zwei oder mehr davon.

Bevorzugt sind Photoinitiatoren aus folgender Gruppe: Benzoin und dessen Derivate sowie Phenylhydroxyalkanon-Typen und Thioxanthon-Typen.

Im Rahmen einer bevorzugten Ausführungsform wird wenigstens anteilig ein Photoinitiator verwendet, der ein Molekulargewicht von mehr als etwa 200 aufweist. Kommerziell erhältliche Photoinitiatoren, die diese Bedingung erfüllen sind beispielsweise Irgacure® 651, Irgacure® 369, Irgacure® 907, Irgacure® 784, Speedcure® EDB, oder Speedcure® ITX.

Photoinitiatoren die bezüglich ihres Molekulargewichts die oben genannte Bedingung erfüllen, sind jedoch auch durch Umsetzung eines niedermolekularen Photoinitiators der eine gegenüber Isocyanaten reaktive funktionelle Gruppe aufweist, beispielsweise eine Aminogruppe oder eine OH-Gruppe, mit einer hochmolekularen Verbindung mit wenigstens einer Isocyanatgruppe erhältlich (polymergebundene Photoinitiatoren). Vorzugsweise werden als Photoinitiator Verbindungen eingesetzt, die mehr als ein Photoinitiatormolekül tragen, beispielsweise zwei, drei oder mehr Photoinitiatormoleküle. Solche Verbindungen lassen sich beispielsweise durch Umsetzung eines polyfunktionellen Alkohols mit zwei oder mehr OH-Gruppen mit geeigneten Di- oder Triisocyanaten und Photoinitiatoren mit einer geeigneten, gegenüber Isocyanaten reaktiven funktionellen Gruppe, erhalten.

Als polyfunktionelle Alkohole sind alle vorstehend genannten polyfunktionellen Alkohole einsetzbar, insbesondere jedoch Neopentylglykol, Glycerin, Trimethylolpropan, Pentaerythrit und deren Alkoxylierungsprodukte mit C₂₋₄₋Alkylenoxiden. Ebenfalls als polyfunktionelle Alkohole geeignet, und im Rahmen der vorliegenden Erfindung besonders bevorzugt, sind die Umsetzungsprodukte dreiwertiger Alkohole mit Caprolacton, beispielsweise das Umsetzungsprodukt von Trimethylolpropan mit Caprolacton (Capa 305, Fa. Interox, Cheshire, UK, Molekulargewicht (Mₙ) = 540).

In einer bevorzugten Ausführungsform der Erfindung wird ein Photoinitiator verwendet, der erhältlich ist, indem ein mindestens dreiwertiger Alkohol mit Caprolacton zu einem mindestens drei OH-Gruppen tragenden Polycaprolacton mit einem Molekulargewicht von etwa 300 bis etwa 900 umgesetzt wird, und anschließend das Polycaprolacton mittels einer mindestens zwei Isocyanatgruppen tragenden Verbindung mit 1-[4-(2-Hydroxyethoxy)phenyl]-2-hydroxy-2-methylpropan-1-on verknüpft wird.

Als mindestens zwei Isocyanatgruppen tragende Verbindungen, insbesondere als Diisocyanate zur Umsetzung mit den genannten Polyolen kommen beispielsweise alle im Rahmen dieses Textes genannten Diisocyanate in Frage. Besonders bevorzugt sind jedoch das 2,4- und das 2,6-Isomere des Toluylendiisocyanats, wobei die Isomeren in ihrer reinen Form oder als Gemisch eingesetzt werden können.

Als Photoinitiatoren zur Herstellung der polymergebundenen Photoinitiatoren eignen sich alle Photoinitiatoren, die eine gegenüber Isocyanatgruppen reaktive funktionelle Gruppe aufweisen. Besonders bevorzugt ist im Rahmen der vorliegenden Erfindung 1-[4-(2-Hydroxyethoxy)phenyl]-2-hydroxy-2-methylpropan-1-on (Irgacure® 2959), das über eine primär gebundene OH-Gruppe verfügt.

Gegebenenfalls können die Photoinitiatoren auch hergestellt werden, indem eine untergeordnete Menge an gegenüber Isocyanatgruppen reaktiven Photoinitiatormolekülen bei der Herstellung des Klebstoffs A mit eingesetzt werden. Dies führt zu einer Anbindung des Photoinitiators an ein Molekül des Klebstoffs.

Es ist weiterhin möglich, die Anbindung des Photoinitiators an eine Polymerkette des Klebstoffs dadurch zu erreichen, daß der über eine entsprechende funktionelle Gruppe verfügende Photoinitiator in monomerer Form dem Klebstoff zugegeben wird, und anschließend, etwa während einer Lagerzeit des Klebstoffs, mit einer entsprechenden polymeren Komponente des Klebstoffs reagiert.

Außerdem ist es möglich, den Photoinitiator mit einer durch Bestrahlung mit UV-Licht oder mit Elektronenstrahlen polymerisierbaren funktionellen Gruppe zu versehen, wobei die mit UV-Licht oder mit Elektronenstrahlen polymerisierbare funktionelle Gruppe beispielsweise über eine Umsetzung des Photoinitiators mit einer ungesättigten Carbonsäure mit dem Photoinitiator verbunden werden kann. Als ungesättigte Carbonsäure eignen sich beispielsweise Acrylsäure oder Methacrylsäure. Besonders geeignet sind im Rahmen der vorliegenden Erfindung die Umsetzungsprodukte von Irgacure® 2959 mit Acrylsäure oder Methacrylsäure.

Es ist demnach möglich, daß als Photoinitiator eine Verbindung eingesetzt wird, die sowohl einen Photoinitiator als auch eine durch Bestrahlung mit UV-Licht oder mit Elektronenstrahlen polymerisierbare funktionelle Gruppe aufweist.

Der erfindungsgemäß zu verwendende Klebstoff enthält den Photoinitiator in einer Menge von bis zu etwa 25 Gew.-%, bezogen auf den gesamten Klebstoff, die Untergrenze sollte bei etwa 0,01 Gew.-% liegen. Bezogen auf das einzelne Photoinitiatormolekül selbst, unabhängig davon, ob es an eine weitere Verbindung kovalent gebunden ist, sollte der Anteil am Klebstoff bei mindestens etwa 0,01 Gew.-% bis zu etwa 10 Gew.-% liegen, bevorzugt ist ein Anteil von etwa 0,5 bis etwa 5 Gew.-% und besonders bevorzugt etwa 1 bis etwa 3 Gew.-%, bezogen auf den gesamten Klebstoff.

Ferner können auch Co-Initiatoren oder Photosensibilisatoren eingesetzt werden, z.B. Acetophenon, Benzophenon und Fluoreszin und deren Derivate.

Gegebenenfalls kann der Klebstoff noch Zusatzstoffe enthalten, die am gesamten Klebstoff einen Anteil von bis zu etwa 49 Gew.-% haben können. Zu den im Rahmen der vorliegenden Erfindung einsetzbaren Zusatzstoffen zählen beispielsweise Weichmacher, Stabilisatoren, Antioxidantien, Farbstoffe oder Füllstoffe.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat. Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu im Rahmen der Erfindung als Zusatzstoffe einsetzbaren Stabilisatoren oder Antioxidantien, zählen Phenole, sterisch gehinderte Phenole hohen Molekulargewichts (Mₙ), polyfunktionelle Phenole, schwefel- und phosphorhaltige Phenole oder Amine. Im Rahmen der Erfindung als Zusatzstoffe einsetzbare Phenole sind beispielsweise Hydrochinon, Hydrochinonmethylether 2,3-(Di-tert.-butyl)hydrochinon, 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octadecyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octylthio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat]; sowie p-Hydroxydiphenylamin oder N,N'-diphenylendiamin oder Phenothiazin.

Weitere Zusatzstoffe können in den Klebstoff mit aufgenommen werden, um bestimmte Eigenschaften zu variieren. Darunter können beispielsweise Farbstoffe wie Titandioxid, Füllstoffe wie Talcum, Ton und dergleichen sein. Gegebenenfalls können in dem erfindungsgemäß zu verwendenden Klebstoff geringe Mengen an thermoplastischen Polymeren vorliegen, beispielsweise Ethylenvinylacetat (EVA), Ethylenacrylsäure, Ethylenmethacrylat und Ethylen-n-butylacrylatcopolymere, die dem Klebstoff gegebenfalls zusätzliche Flexibilität, Zähigkeit und Stärke verleihen. Es ist ebenfalls möglich bestimmte hydrophile Polymere zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, insbesondere die Acetate mit einem Substitutionsgrad von weniger als 2,5, welche beispielsweise die Benetzbarkeit der Klebstoffe erhöhen.

Bei diesen Schmelzklebstoffen ist die Entwicklung von Festigkeit und Dehnbarkeit so geartet, daß eine Rundung des Buchblocks direkt im Anschluß an die Verklebung, also ohne Verzögerung durch Trocknung oder Reaktion der NCO-Gruppen möglich ist.
Die dazu einzuhaltenden Bedingungen sind vorab anhand von Klebstofffilmen festzustellen. Wichtige Parameter (nach DIN 53455) und deren Bereiche sind:
1. Streckspannung im Bereich < 0,5, vorzugsweise 1 bis 5 N/mm².
2. Dehnung > 100, vorzugsweise > 200 und insbesondere 300 bis 600 %.
3. Reißfestigkeit: > 1, vorzugsweise > 2 und insbesondere > 3 N/mm².
Einzuhalten sind die Bereiche der Streckspannung und Dehnung, vorzugsweise auch die der Reißfestigkeit.

Runde Buchrücken werden zweckmäßigerweise auf folgende Weise hergestellt: Der Schmelzklebstoff wird, wie allgemein bekannt, entweder per Radauftrag oder per Düse auf den zuvor vorbereiteten (gefrästen und eventuell gekerbten) Rücken aufgetragen. Die Auftragsstärke liegt bei 0,05 bis 1 mm, insbesondere bei 0,1 bis 0,5 und vor allem bei 0,2 bis 0,4 mm.
Anschließend durchläuft der in den Klammern des Klebebinders eingeklemmte Buchblock eine UV-Station, das heißt, er wird mit UV-Licht bestrahlt. Die Bestrahlung durch energiereiche Strahlen führt zu einem Molekulargewichtsaufbau, der zusätzlich zum Kohäsionsgewinn durch Erkalten des Schmelzklebstoffes eine deutliche Steigerung der Kohäsion bewerkstelligt, und zwar in einem Ausmaß, so daß die vorgenannten Bereiche eingehalten werden können.
Aufgrund des Molekulargewichtsaufbaus kann der Buchblock anschließend direkt in eine Buchstraße weitergeleitet werden, wo er in-line geschnitten und unter den bekannten Bedingungen gerundet wird.
Der gerundete Buchblock wird anschließend gegebenenfalls in einen festen Umschlag eingehängt. Je nach Luftfeuchtigkeit und Papierfeuchte erfolgt spätestens in den nächsten 24 bis 72 Stunden die Abreaktion der IsocyanatGruppen des Polyurethanes, so daß die Kohäsion des gerundeten Klebstofffilmes weiter zunimmt.

Diese weitere Reaktion führt zu einer ausgezeichneten, mit anderen Systemen nicht zu erreichende Stabilität der Rundung und zu den hervorragenden Gebrauchseigenschaften der mit Polyurethanklebstoffen gebundenen Bücher, wie z.B. Mineralölbeständigkeit, Temperaturbeständigkeit, Alterungsbeständigkeit usw..

## Patentansprüche

1. Verwendung eines UV-reaktiven Schmelzklebstoffs auf der Basis eines feuchtigkeitsvernetzenden Polyurethans, das olefinisch ungesättigte Doppelbindungen und NCO-Gruppen enthält, bei der In-line-Rundung von Buchblocks.

2. Verwendung nach Anspruch 1 **dadurch gekennzeichnet, dass** die olefinisch ungesättigten Doppelbindungen in Form von Acrylsäurederivaten enthalten sind.

3. Verwendung nach Anspruch 1, **gekennzeichnet durch** Verfahrensbedingungen vor der Rundung, die bei den entsprechenden Klebstofffilmen zu folgenden Eigenschaften nach DIN 53455 führen:
- Dehnung > 100 %,
- Streckspannung > 0,5 N/mm² und vorzugsweise
- Reißfestigkeit > 1 N/mm².

4. Verfahren zur Herstellung von Buchblocks mit rundem Rücken mit folgenden Verfahrensschritten:
1. Auftrag eines Schmelzklebstoffes nach einem der Ansprüche 1 oder 2 auf dem Rücken mit einer Auftragsstärke von. 0,05 bis 1 mm,
2. UV-Bestrahlung des Schmelzklebstoffes in einem Ausmaß entsprechend den gemäß Anspruch 3 ermittelten Verfahrensbedingungen und
3. Weiterleiten des behandelten Buchblocks direkt in eine Buchstraße, wo er in-line geschnitten und unter den bekannten Bedingungen gerundet wird.

## Claims

1. The use of a UV-reactive hotmelt adhesive based on a moisture-crosslinking polyurethane which contains both olefinically unsaturated double bonds and NCO groups in the in-line rounding of book blocs.

2. The use claimed in claim 1, **characterized in that** the olefinically unsaturated double bonds are contained as acrylic acid derivatives.

3. The use claimed in claim 1, **characterized by** process conditions before rounding which provide the corresponding adhesive films with the following properties to DIN 53455:
- elongation > 100%,
- yield stress > 0.5 N/mm² and preferably
- ultimate tensile strength > 1 N/mm².

4. A process for the production of book blocs with a round spine comprising the following steps:
1) applying a hotmelt adhesive as claimed in claim 1 or 2 to the spine in a film thickness of 0.05 to 1 mm,
2) exposing the hotmelt adhesive to UV-radiation to an extent which corresponds to the process conditions defined in claim 3 and
3) forwarding the treated book bloc directly to a book making line where it is cut-line and rounded under known conditions.

## Revendications

1. Utilisation d'une colle fusible réactive aux UV à base d'un polyuréthane réticulant à l'humidité, qui contient des doubles liaisons oléfiniquement insaturées et des groupes NCO, dans l'arrondissage en ligne de livres non reliés.

2. Utilisation selon la revendication 1, **caractérisée en ce que** les doubles liaisons oléfiniquement insaturées sont contenues sous forme de dérivés de l'acide acrylique.

3. Utilisation selon la revendication 1, **caractérisée par** des conditions opératoires avant l'arrondissement, qui conduisent, pour les pellicules d'adhésif correspondantes, aux propriétés suivantes, selon la norme DIN 53455 :
- allongement supérieur à 100 %;
- tension d'étirement supérieure à 0,5 N/mm² et de préférence
- résistance à la déchirure supérieure à 1 N/mm².

4. Procédé de fabrication de livres non reliés avec des dos arrondis, comportant les étapes opératoires suivantes :
1. Dépôt d'une colle fusible selon l'une des revendications 1 ou 2 sur le dos avec une épaisseur de dépôt de 0,05 à 1 mm,
2. Irradiation de la colle fusible par les UV dans une mesure correspondant aux conditions opératoires déterminées selon la revendication 3 et
3. Ensuite transfert direct des livres non reliés traités dans une chaîne de fabrication de livres, où ils sont découpés en ligne et arrondis dans les conditions connues.
